# FASCICULE DE BREVET EUROPEEN

(11) **EP 3 626 682 B1**
(45) Date de publication et mention de la délivrance du brevet: **21.04.2021**
(21) Numéro de dépôt: 19198438.4
(22) Date de dépôt: 19.09.2019
(51) Int. Cl.: C01G 23/00, H01M 4/58, H01M 10/0525

(54) **MATERIAU LITHIE**
LITHIUM-ENTHALTENDES MATERIAL
LITHIATED MATERIAL

(30) Priorité: 19.09.2018 FR 1858478
(43) Date de publication de la demande: 25.03.2020
(73) Titulaire: Commissariat à l'Energie Atomique et aux Energies Alternatives, 75015 Paris (FR)
(72) Inventeur: COLIN, Jean-François, 38054 Grenoble cedex 09 (FR); MARTINET, Sébastien, 38054 Grenoble cedex 09 (FR); PERALTA, David, 38054 Grenoble cedex 09 (FR); CELASUN, Yagmur, 38054 Grenoble cedex 09 (FR)
(74) Mandataire: Nony

(56) Documents cités:
- EP-A1- 2 977 354
- GB-A- 2 026 762

## Description

La présente invention concerne un matériau à base de lithium, titane, soufre et sélénium destiné à constituer au moins partiellement une cathode de batterie.

Les cathodes à base de soufre présentent un fort potentiel pour des applications de batterie lithium-ion. Le sulfure de lithium titane, de formule Li₂TiS₃, connu notamment de EP 2 977 354 A1 et de l'article A. Sakuda et al., « Rock-salt-type lithium metal sulphide as novel positive-electrode materials », Sci. Rep., vol. 4, 4883 (2014), présente une capacité réversible élevée, pouvant atteindre 400 mAh/g grâce à des réactions d'oxydo-réduction à multiples électrons.

Cependant, la capacité réversible d'une batterie lithium-ion comportant une cathode de Li₂TiS₃ décroît rapidement lorsque le nombre de cycles de charge/décharge augmente. Notamment, après 10 cycles, la capacité réversible atteint seulement 80 % de la valeur maximale atteinte généralement au premier cycle. Le sulfure de lithium titane présente donc un comportement de charge/décharge instable.

Ce comportement peut être expliqué par un phénomène d'activité d'oxydoréduction du soufre lors de la première charge. Dans une batterie lithium-ion comportant une cathode en sulfure de lithium titane, des ions lithium sont introduits ou extraits de la cathode au cours des cycles de charge/décharge. Afin de maintenir l'équilibre de la charge électrique, un élément doit être oxydé et un autre élément doit être réduit. De tels éléments forment un « couple redox ». Cependant, lors de la première charge, le titane contenu dans le sulfure de lithium titane n'est pas disponible pour former un couple redox de manière à compenser le déséquilibre de charge résultant de l'extraction du lithium de la cathode. En effet, la structure du sulfure de lithium titane est stabilisée par des ions Ti⁴⁺, qui présentent l'état de valence le plus élevé du titane. Le titane ne peut donc pas être oxydé. En conséquence, seul le soufre est disponible lors de la première charge pour équilibrer la charge électrique.

Au cours des charges ultérieures, le phénomène décrit ci-dessus disparaît, la capacité réversible du sulfure de lithium titane provenant alors de l'activité d'oxydoréduction du titane. Cependant, il est en outre observé que le sulfure de lithium titane est progressivement dégradé et perd une portion de l'activité du soufre qu'il comporte, au fur et à mesure que le nombre de cycles charge/décharge augmente. La structure est alors modifiée, ce qui participe aussi à l'instabilité du comportement de charge/décharge du sulfure de lithium titane.

L'instabilité du comportement de charge/décharge décrite ci-dessus représente un frein à l'industrialisation de batteries lithium-ion contenant du sulfure de lithium titane.

Un utilisateur d'un dispositif alimenté électriquement par une batterie rechargeable s'attend en effet à ce que la capacité réversible de la batterie ne diminue pas, ou peu, avec une augmentation du nombre de cycles de charge/décharge.

Il existe donc un besoin pour un matériau ne présentant pas l'inconvénient précité.

L'invention vise à satisfaire ce besoin, et propose un matériau de formule LiₐTi_{b}(AₓS₃₋ₓ)_{c} dans lequel A est un élément métalloïde choisi parmi le sélénium, le tellure et leurs mélanges, et les coefficients stœchiométriques a, b, c et x sont tels que
∘ 0 < x < 2,2 ;
∘ 0,4 ≤ a ≤ 4,5 ;
∘ 0,9 ≤ b ≤ 1,1 ; et
∘ 0,9 ≤ c ≤ 1,1.

Le matériau selon l'invention peut présenter une capacité réversible inférieure à celle du sulfure de lithium titane. Cependant, au sein d'une batterie, il présente une capacité réversible qui décroit relativement moins rapidement, avec une augmentation du nombre de cycles charge/décharge, que celle du sulfure de lithium titane. Il s'avère donc présenter un comportement de charge/décharge plus stable que le matériau de formule Li₂TiS₃.

Sans être liés par une quelconque théorie, les inventeurs attribuent la meilleure stabilité du matériau selon l'invention à la conductivité électronique élevée de l'élément métalloïde. Par ailleurs, l'élément métalloïde présente un rayon ionique plus grand que le soufre. Le mérite revient aux inventeurs d'avoir réussi à introduire l'élément métalloïde dans la structure compacte du matériau selon l'invention. Un atome de l'élément métalloïde y occupe plus de place qu'un atome de soufre.

De préférence, l'élément métalloïde A est le sélénium Se. Le sélénium présente une conductivité électronique vingt fois plus élevée que celle du soufre.

Le coefficient stœchiométrique x peut être inférieur ou égal à 2,0, voire inférieur ou égal à 1,5. De préférence, il est inférieur ou égal à 1,2, voire de préférence inférieur ou égal à 1,1. De préférence, il est égal à 1. Dans une variante, il peut être égal à 2.

Le coefficient stœchiométrique a peut être supérieur ou égal à 1,0, voire supérieur ou égal à 1,2. De préférence, il est supérieur ou égal à 1,4, mieux supérieur ou égal à 1,5. Il peut être inférieur ou égal à 4,0, voire inférieur ou égal à 3,0. De préférence, il est inférieur ou égal à 2,5, voire inférieur ou égal à 2,1, de préférence inférieur ou égal à 2,05.

De préférence, le coefficient stœchiométrique a est égal à 2.

Le coefficient stœchiométrique b peut être supérieur ou égal à 0,95 et/ou inférieur ou égal à 1,05. De préférence, il est égal à 1.

Le coefficient stœchiométrique c peut être supérieur ou égal à 0,95 et/ou inférieur ou égal à 1,05. De préférence, il est égal à 1.

Le coefficient stœchiométrique a peut être égal à 2 et/ou le coefficient stœchiométrique b peut être égal à 1 et/ou le coefficient stœchiométrique c peut être égal à 1.

De préférence, le matériau selon l'invention est de formule LiₐTi_{b}SeₓS₃₋ₓ avec 1,5 ≤ a ≤ 2,05 ; 0,95 ≤ b ≤ 1,05 et de préférence 0 ≤ x ≤ 1,2.

De préférence, le coefficient stœchiométrique a est égal à 2, le coefficient stœchiométrique b est égal à 1 et le coefficient stœchiométrique c est égal à 1.

Autrement dit, d'une façon préférée, le matériau selon l'invention est de formule Li₂TiSeₓS₃₋ₓ, de préférence avec x ≤ 1,2. Le matériau de formule Li₂TiSeₓS₃₋ₓ présente de préférence la même structure que le matériau de formule Li₂TiS₃, dans lequel des ions soufre sont substitués par des ions sélénium.

De préférence, le matériau selon l'invention est de formule Li₂TiSeS₂. Il présente alors une stabilité optimale particulièrement adaptée à former une cathode de batterie, notamment d'une batterie lithium-ion.

Le matériau selon l'invention présente de préférence une structure cristallographique de type NaCl. De préférence, le paramètre de maille de la structure de type NaCl est compris entre 5,10 Å et 5,30 Å, de préférence compris entre 5,10 Å et 5,18 Å, par exemple égal à 5,16 Å. 1 Å correspond à 10⁻¹⁰ m.

Une structure cristallographique « de type NaCl » est une structure cubique à face centrée de groupe d'espace *Fm*3̅*m.*

Le matériau selon l'invention présente de préférence une capacité réversible maximale supérieure à 200 mAh.g⁻¹, voire supérieure à 230 mAh.g⁻¹, exprimée par gramme de matériau selon l'invention, La capacité réversible est mesurée entre 1,8 V et 3,0 V *vs* Li⁺/Li selon un régime C/10. Un régime C/y correspond à une charge effectuée en y heures

Par ailleurs, l'invention concerne une poudre comportant, voire constituée par, des particules formées du matériau selon l'invention. Les particules de la poudre selon l'invention peuvent être de forme variée. Par exemple, les particules sont de forme sphérique ou plaquettaire. Les particules peuvent présenter une taille comprise entre 20 nm et 5 µm, notamment inférieure à 1 µm. La « taille » d'une particule est sa plus grande dimension observable sur un cliché pris, par exemple au moyen d'un microscope électronique à balayage, suivant une direction perpendiculaire au plan sur lequel repose ladite particule.

Les particules peuvent former des agglomérats, présentant par exemple une taille de l'ordre de 30 µm.

Par ailleurs, l'invention concerne une cathode de batterie comportant, voire constituée par le matériau selon l'invention. La cathode peut notamment comporter la poudre selon l'invention dispersée au sein d'un liant.

L'invention concerne aussi une batterie, choisie parmi une batterie lithium et une batterie lithium-ion, la batterie comportant une cathode selon l'invention. La batterie peut comporter une anode en un matériau choisi parmi le graphite, le lithium ou le silicium ou tout autre matériau de conversion.

De préférence la batterie est une batterie lithium-ion. La capacité réversible maximale de la batterie lithium-ion est supérieure à 200 mAh.g⁻¹, voire supérieure à 230 mAh.g⁻¹, exprimée par gramme de matériau selon l'invention. La capacité réversible maximale de la batterie lithium-ion est la valeur maximale de la capacité mesurée sur une succession des quinze premiers cycles de charge/décharge de la batterie, mesurée entre 1,8 V et 3,0 V *vs* Li⁺/Li selon un régime C/10. Un régime C/y correspond à une charge effectuée en y heures. Par ailleurs, la rétention de capacité à quinze cycles de la batterie lithium-ion, correspondant au rapport de la capacité réversible mesurée en fin de décharge au quinzième cycle sur la capacité réversible mesurée en fin de décharge au premier cycle, est de préférence, supérieure ou égale à 75%, de préférence supérieure ou égale à 85 %, mieux supérieure ou égale à 90 %.

L'invention concerne enfin un procédé de fabrication d'un matériau selon l'invention, comportant une étape de broyage de matières premières, de préférence en milieu humide dans un solvant, les matières premières étant choisies de manière à obtenir en fin d'étape de broyage le matériau selon l'invention.

D'autres avantages de l'invention apparaitront à la lecture de la description détaillée qui va suivre, et grâce au dessin annexé dans lequel :
- la figure 1 contient des diffractogrammes obtenus par diffraction des rayons X de matériaux de formule Li₂TiS₃, Li₂TiSeS₂ et Li₂TiSe₂S dans lesquels l'intensité de diffraction, en unité arbitraire, est exprimée en fonction de l'angle 2*θ* de diffraction,
- les figures 2 à 4 sont des photographies prises en microscopie électronique à balayage, de matériaux de formule Li₂TiS₃, Li₂TiSeS₂ et Li₂TiSe₂S respectivement,
- la figure 5 est un graphique représentant l'évolution du potentiel, en V *vs* Li+/Li, en fonction de la capacité, en mAh/g, lors du premier cycle de charge/décharge, d'une batterie comportant le matériau de formule Li₂TiSeS₂,
- la figure 6 est un graphique représentant l'évolution de la rétention de capacité de batteries comportant le matériau de formule Li₂TiS₃, Li₂TiSeS₂ et Li₂TiSe₂S respectivement, en fonction du nombre de cycles de charge/décharge, et
- la figure 7 est un graphique représentant l'évolution du potentiel, en V vs Li+/Li, en fonction du coefficient stœchiométrique x du lithium, d'un exemple de matériau selon l'invention.

Pour fabriquer le matériau selon l'invention, on peut mettre en œuvre une étape de broyage de matières premières, les matières premières étant choisies de manière à obtenir en fin d'étape de broyage le matériau selon l'invention.

L'homme du métier sait adapter les quantités de chacune des matières premières de manière à obtenir en fin d'étape de broyage le matériau selon l'invention.

Le broyage peut être conduit en milieu humide dans un solvant.

Le solvant peut être choisi parmi l'hexane, le cyclohexane, un mélange d'heptane, d'acétone et d'éthanol, et leurs mélanges. De préférence, le solvant est l'hexane, de préférence de pureté supérieure à 99,5 %, de préférence supérieure à 99,9 %.

De préférence, au cours du broyage, les matières premières sont dispersées dans le solvant.

Les matières premières se présentent de préférence sous la forme de poudres.

Elles peuvent comporter au moins deux sources apportant chacune au moins un élément choisi parmi le lithium, le soufre, le sélénium et le titane.

De préférence, les matières premières comportent une poudre de particules de titane comportant plus de 95%, voire plus de 99% en masse de titane, et une poudre de particules de sélénium comportant plus de 95%, voire plus de 99% en masse de sélénium. Elles peuvent comporter une poudre de particules de sulfure de lithium. De préférence, elles comportent une poudre de particules de sulfure de lithium, une poudre de particules de titane et une poudre de particules de sélénium.

La taille médiane de chacune desdites poudres peut être comprise entre 44 µm et 74 µm.

L'étape de broyage est mise en œuvre au sein d'un broyeur, par exemple un broyeur planétaire à billes. L'invention n'est toutefois pas limitée à un tel type de broyeur, tout autre broyeur conventionnellement utilisé dans le domaine de l'invention pouvant être utilisé.

Les matières premières peuvent être versées dans le broyeur, préalablement ou au cours du broyage. Elles peuvent être versées les unes à la suite des autres dans le broyeur. En variante, un mélange particulaire peut être formé en mélangeant ensemble les matières premières préalablement à l'étape de broyage. Le cas échéant, le solvant peut être introduit avant, conjointement ou après l'introduction des matières premières dans le broyeur.

De préférence, la durée de l'étape de broyage est comprise entre 10 h et 50 h, de préférence est comprise entre 20 h et 30 h. Par ailleurs, l'étape de broyage peut être conduite à une température comprise entre 10 °C et 40 °C, par exemple à température ambiante.

Pour limiter la corrosion des matières premières et du matériau en formation, l'étape de broyage est de préférence mise en œuvre sous une atmosphère réductrice ou de préférence neutre, par exemple sous argon.

De préférence, le matériau obtenu en fin d'étape de broyage se présente sous forme d'une poudre.

Le cas échéant, le procédé peut par ailleurs comporter une étape de séchage successive à l'étape de broyage, de manière à éliminer le solvant.

### EXEMPLES

Les exemples non limitatifs suivants sont donnés dans le but d'illustrer l'invention.

Les matières premières suivantes sont utilisées pour réaliser les exemples suivants :
- poudre de particules de sulfure de lithium Li₂S, commercialisée sous la référence 213241-10G par la société Sigma Aldrich,
- poudre de particules de sulfure de titane, commercialisée sous la référence 333492-10G par la société Sigma Aldrich,
- poudre de particules de titane, commercialisée sous la référence 36679.14 par la société Alfa Aesar,
- poudre de particules de sélénium, commercialisée sous la référence 36208.18 par la société Alfa Aesar.

Par ailleurs, les analyses de diffraction par rayon X ont été réalisées au moyen d'un diffractomètre D8 Advance de marque Bruker®, et les tailles des particules des poudres des exemples ont été mesurées au moyen d'images obtenues avec un microscope électronique à balayage LEO 1530 de marque Zeiss®.

### Exemple 1 comparatif

0,4363 g de sulfure de lithium et 1,0635 g de sulfure de titane sont placés dans un pot en zircone d'un volume de 50 ml et contenant 285 billes de zircone d'un diamètre égal à 5 mm. Aucun solvant n'est ajouté. Le pot est ensuite fermé au moyen d'un couvercle et monté sur un broyeur à billes planétaires de marque Retsch® et de référence PM 100. Le bol est chargé et déchargé dans une boite à gants emplie d'argon. Le broyage est alors réalisé pendant une durée de 20 heures, la vitesse de rotation du broyeur étant fixée à 510 tours par minutes.

Une poudre de particules de Li₂TiS₃ est ainsi obtenue.

Dans une boite à gants sous atmosphère d'argon, on prépare ensuite une composition comportant en pourcentages en masse, 10 % de carbone Super P C65 commercialisé par la société TIMCAL, 10 % de difluorure de polyvinylidène (PVDF) à titre de liant, et 80 % de la poudre de particules de Li₂TiS₃. 0,400 ml de N-méthyl-2-pyrrolidone (NMP) sont ajoutés à la composition. La composition est ensuite mélangée pendant 5 minutes à 25°C. On obtient ainsi une encre. On enduit une épaisseur de 100 µm de l'encre, au moyen d'une racle sur un feuillard d'aluminium revêtu d'un substrat de Téflon®. L'encre est séchée sous une atmosphère d'argon pendant 48 heures. Une électrode est ensuite découpée dans le feuillard d'aluminium recouvert de l'encre ayant séchée. L'électrode est ensuite pressée sous une pression de 100 kN, découpée sous la forme d'une pastille d'un diamètre de 14 mm, puis est séchée sous vide à 60°C pendant 48 heures.

Une batterie se présentant sous la forme d'une pile bouton au format CR2032 est fabriquée et comporte l'électrode formant cathode et une contre-électrode de lithium (Li) métallique formant anode. Un séparateur sous forme d'une pastille d'un diamètre de 16 mm, constitué d'une membrane de marque Viledon de référence FS 2207-2- DA WA et d'une membrane Celgard 2400, est disposé entre l'électrode et la contre-électrode. Les électrodes, contre-électrode et séparateur sont immergés dans un volume de 150 µl d'un électrolyte liquide LP100 constitué d'un solvant formé, en volume, d'une part d'éthyl- carbonate, d'une part de propylène- carbonate et de trois parts de diméthyl- carbonate, dans lequel est dissous un sel d'hexafluorophosphate de lithium (LiPF₆) à une concentration de 1 mol/l.

La batterie est soumise à 15 cycles formés d'une charge galvanostatique suivie d'une décharge galvanostatique, imposés à 25°C entre un potentiel de 1,8 V et 3,0 V *vs* Li⁺/Li à un régime de C/10.

Le système de cyclage de batterie est de marque Arbin Instruments®.

### Exemple 2

0,336 g de sulfure de lithium, 0,410 g de sulfure de titane, 0,175 g de titane et 0,578 g de sélénium sont placés dans un pot en zircone d'un volume de 50 ml et contenant 285 billes de zircone d'un diamètre égal à 5 mm. De l'hexane de haute pureté (supérieure à 99,9%) est versée dans le pot jusqu'à recouvrir les billes de zircone. Le pot est ensuite fermé au moyen d'un couvercle et monté sur un broyeur à billes planétaires de marque Retsch® et de référence PM 100. Le broyeur est disposé dans une boite à gants emplie d'argon. Le broyage est alors réalisé pendant une durée de 20 heures, la vitesse de rotation du broyeur étant fixée à 510 tours par minutes.

Une poudre de particules de Li₂TiSeS₂ est ainsi obtenue.

Une électrode et une batterie sont fabriquées selon le même mode opérationnel que celui décrit à l'exemple 1 en remplaçant la poudre de l'exemple 1 par la poudre de l'exemple 2.

### Exemple 3

0,274 g de sulfure de lithium, 0,285 g de titane et 0,940 g de sélénium sont placés dans un pot en zircone d'un volume de 50 ml et contenant 285 billes de zircone d'un diamètre égal à 5 mm. De l'hexane de haute pureté (supérieure à 99,9%) est versée dans le pot jusqu'à recouvrir les billes de zircone. Le pot est ensuite fermé au moyen d'un couvercle et monté sur un broyeur à billes planétaires de marque Retsch® et de référence PM 100. Le bol est chargé et déchargé dans une boite à gants emplie d'argon. Le broyage est alors réalisé pendant une durée de 20 heures, la vitesse de rotation du broyeur étant fixée à 510 tours par minutes.

Une poudre de particules de Li₂TiSe₂S est ainsi obtenue.

Une électrode et une batterie sont fabriquées selon le même mode opérationnel que celui décrit à l'exemple 1 en remplaçant la poudre de l'exemple 1 par la poudre de l'exemple 3.

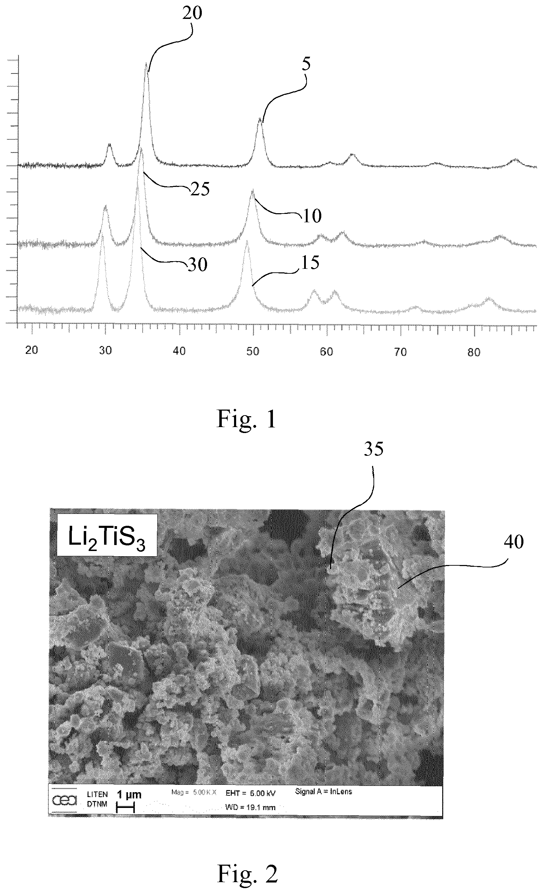

Des analyses par diffraction de rayons X des poudres de Li₂TiS₃, Li₂TiSeS₂ et Li₂TiSe₂S confirment que les matériaux constitutifs de ces poudres présentent une structure cristallographique de type NaCl, comme cela est confirmé par les diffractogrammes respectifs 5, 10 et 15 représentés sur la figure 1.

Un décalage des pics principaux 20, 25 et 30 de diffraction est observé aux faibles angles avec une augmentation de la quantité de sélénium dans la structure. Il est lié au fait que le sélénium présente un rayon ionique égal à 198 Å, plus élevé que celui du soufre, égal à 184 Å. Pour cette même raison, le paramètre de maille augmente avec une augmentation du coefficient stœchiométrique du sélénium, comme observé dans le tableau 1. Enfin, le décalage des pics principaux est d'autant plus élevé que le coefficient stœchiométrique du sélénium augmente.

**Tableau 1**

| Exemple | Matériau | Paramètre de maille (Å) |
|---|---|---|
| 1 | Li₂TiS₃ | 5,0803 |
| 2 | Li₂TiSeS₂ | 5,1671 |
| 3 | Li₂TiSe₂S | 5,2516 |

Par ailleurs, comme cela est observé sur la figure 2, les particules de Li₂TiS₃ 35 présentent majoritairement une forme sensiblement sphérique d'une taille inférieure à 500 nm et forment des agglomérats 40.

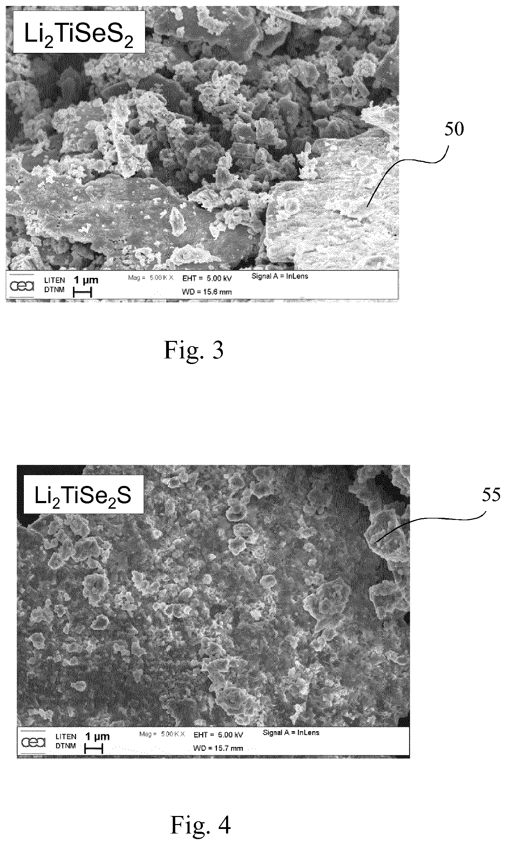

Comme observé sur les figures 3 et 4 respectivement, les particules de Li₂TiSeS₂ 50 et les particules de Li₂TiSe₂S 55 peuvent présenter une forme différente des particules de Li₂TiS₃. Notamment, elles peuvent présenter une forme plaquettaire, avec une taille de l'ordre du micron.

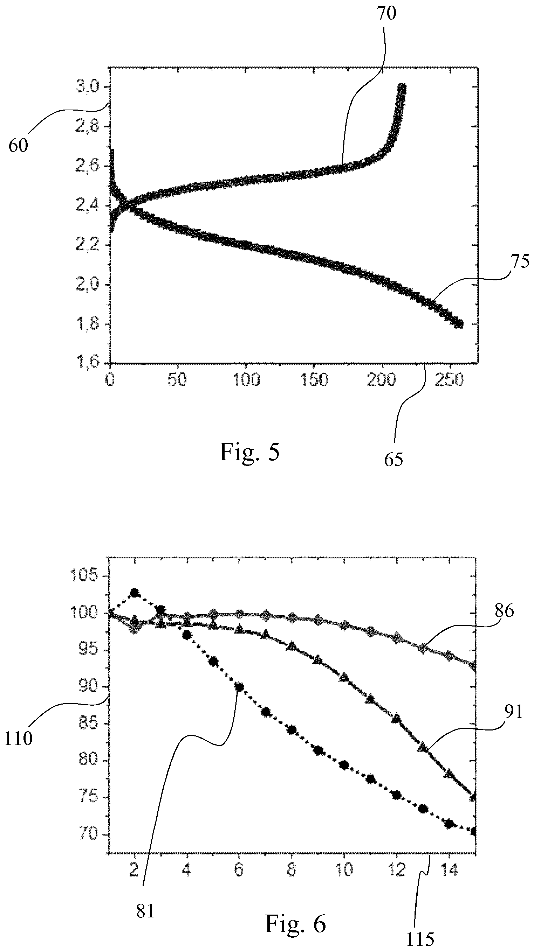

La figure 5 représente l'évolution au cours du premier cycle de charge-décharge du potentiel 60 de l'électrode positive comportant le matériau de formule Li₂TiSeS₂ en fonction de la capacité spécifique 65 du matériau. Au cours de la charge 70, des ions Li⁺ sont extraits et sont déposés sur l'électrode négative, de sorte qu'un matériau de formule Li_{a'}TiSeS₂ (avec a'< 2) est formé. Au cours de la décharge 75, les réactions d'oxydoréduction inverses se produisent. Une capacité spécifique supérieure d'environ 250 mAh/g est obtenue.

La figure 6 représente, pour les batteries des exemples 1 à 3, l'évolution 81, 86 et 91 respective de la rétention de capacité 110, exprimée en pourcents, en fonction du nombre 115 de cycles. La rétention de capacité correspond au rapport de la capacité réversible mesurée en fin de décharge d'un cycle de charge/décharge sur la capacité réversible mesurée en fin de décharge au premier cycle.

Comme cela est connu de l'art antérieur, la capacité de rétention 81 de la batterie de l'exemple 1, à base de Li₂TiS₃, décroit rapidement en fonction du nombre de cycles. Elle n'est que de 80 % au dixième cycle et de 71 % au quinzième cycle.

Les batteries des exemples 2 et 3 respectivement présentent chacune un comportant plus stable que la batterie de l'exemple 1, caractérisé par une rétention de capacité plus élevée. La capacité de rétention 91 de la batterie à base de Li₂TiSe₂S de l'exemple 3 est supérieure à 90 % au dixième cycle et de 75 % au quinzième cycle. La batterie de l'exemple 2, à base de Li₂TiSeS₂ présente le comportement de charge/décharge le plus stable et est préférée. Elle présente une capacité de rétention 86 supérieure à 95 % au dixième cycle et supérieure à 90 % au quinzième cycle.

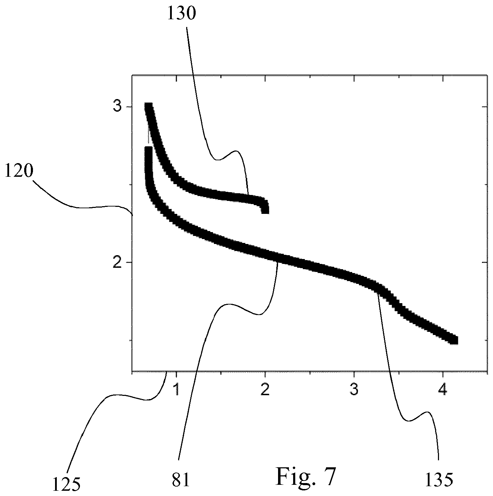

La figure 7 illustre l'évolution au cours d'une charge suivie d'une décharge, de l'évolution du potentiel 120 en fonction du coefficient stœchiométrique x du lithium 125 d'un matériau de formule de formule LiₓTiSe₂S.

Le matériau de l'exemple 3 (x=2) est initialement placé en tant qu'électrode face à une contre-électrode de lithium. Au cours de la charge 130, du lithium est progressivement extrait du matériau jusqu'à ce que le coefficient stœchiométrique x atteigne une valeur de l'ordre de 0,7 pour un potentiel égal à 3 V. La décharge 135 est ensuite effectuée, et du lithium est alors introduit dans le matériau. Un coefficient stœchiométrique x égal à 4,17 est ainsi obtenu en fin de décharge pour un potentiel égal à 1,5 V.

Bien entendu, l'invention n'est pas limitée aux modes de réalisation du produit et aux modes de mise en œuvre du procédé présentés dans la présente description.

Par ailleurs, sauf indication contraire, une inégalité du type « A inférieur à B », aussi formulée comme « A < B », est considérée strictement. Il en va de même pour une inégalité du type « A supérieur à B », aussi formulée comme « A > B ». Autrement dit, l'égalité entre A et B est exclue.

## Revendications

1. Matériau de formule LiₐTi_{b}(AₓS₃₋ₓ)_{c} dans lequel A est un élément métalloïde choisi parmi le sélénium, le tellure et leurs mélanges, et les coefficients stœchiométriques a, b, c et x sont tels que
∘ 0 < x < 2,2 ;
∘ 0,4 ≤ a ≤ 4,5 ;
∘ 0,9 ≤ b ≤ 1,1 ; et
∘ 0,9 ≤ c ≤ 1,1.

2. Matériau selon la revendication 1, dans lequel l'élément métalloïde A est le sélénium.

3. Matériau selon l'une quelconque des revendications 1 et 2, dans lequel le coefficient stœchiométrique x est inférieur ou égal à 1,2.

4. Matériau selon l'une quelconque des revendications précédentes, dans lequel le coefficient stœchiométrique x est égal à 1.

5. Matériau selon l'une quelconque des revendications précédentes, dans lequel le coefficient stœchiométrique a est égal à 2 et/ou le coefficient stœchiométrique b est égal à 1 et/ou le coefficient stœchiométrique c est égal à 1, de préférence le coefficient stœchiométrique a est égal à 2 et le coefficient stœchiométrique b est égal à 1 et le coefficient stœchiométrique c est égal à 1.

6. Matériau selon l'une quelconque des revendications précédentes, présentant une structure cristallographique de type NaCl.

7. Matériau selon l'une quelconque des revendications précédentes, comportant une capacité réversible maximale supérieure à 200 mAh.g⁻¹, voire supérieure à 230 mAh.g⁻¹.

8. Poudre comportant, voire constituée par, des particules formées du matériau selon l'une quelconque des revendications précédentes.

9. Cathode de batterie comportant le matériau selon l'une quelconque des revendications précédentes, la cathode de batterie comportant notamment la poudre selon la revendication précédente dispersée dans un liant.

10. Batterie, de préférence choisie parmi une batterie lithium-ion et une batterie lithium, comportant une cathode selon la revendication précédente.

11. Batterie lithium-ion selon la revendication précédente, présentant une rétention de capacité à quinze cycles supérieure ou égale à 75%, de préférence supérieure ou égale à 85 %, mieux supérieure ou égale à 90 %.

12. Procédé de fabrication d'un matériau selon l'une quelconque des revendications 1 à 7, comportant une étape de broyage de matières premières, les matières premières étant choisies de manière à obtenir en fin d'étape de broyage le matériau selon l'une quelconque des revendications précédentes.

13. Procédé selon la revendication 12, dans lequel les matières premières comprennent une poudre de particules de titane, une poudre de particules de sélénium, et de préférence une poudre de particules de sulfure de lithium.

14. Procédé selon l'une quelconque des revendications 12 et 13, l'étape de broyage étant conduite en milieu humide dans un solvant, de préférence le solvant étant de l'hexane, de préférence présentant une pureté supérieure à 99,5 %.

15. Procédé selon l'une quelconque des revendications 12 à 14, l'étape de broyage étant mise en œuvre sous une atmosphère réductrice ou de préférence neutre, par exemple sous argon.

## Patentansprüche

1. Material mit der Formel LiₐTi_{b}(AₓS₃₋ₓ)_{c}, bei dem A ein Halbmetall ist, das unter Selen, Tellur und ihren Mischungen gewählt ist, und die stöchiometrischen Koeffizienten a, b, c und x derart sind, dass
∘ 0 < x < 2,2;
∘ 0,4 ≤ a ≤ 4,5;
∘ 0,9 ≤ b ≤ 1,1; und
∘ 0,9 ≤ c ≤ 1,1.

2. Material nach Anspruch 1, bei dem das Halbmetall A Selen ist.

3. Material nach einem der Ansprüche 1 und 2, bei dem der stöchiometrische Koeffizient x kleiner oder gleich 1,2 ist.

4. Material nach einem der vorhergehenden Ansprüche, bei dem der stöchiometrische Koeffizient x gleich 1 ist.

5. Material nach einem der vorhergehenden Ansprüche, bei dem der stöchiometrische Koeffizient a gleich 2 ist und/oder der stöchiometrische Koeffizient b gleich 1 ist und/oder der stöchiometrische Koeffizient c gleich 1 ist, bevorzugt der stöchiometrische Koeffizient a gleich 2 ist und der stöchiometrische Koeffizient b gleich 1 ist und der stöchiometrische Koeffizient c gleich 1 ist.

6. Material nach einem der vorhergehenden Ansprüche, das eine Kristallstruktur vom Typ NaCl aufweist.

7. Material nach einem der vorhergehenden Ansprüche mit einer maximalen reversiblen Kapazität von mehr als 200 mAh.g⁻¹ oder sogar mehr als 230 mAh.g⁻¹.

8. Pulver, das Partikel beinhaltet oder sogar aus Partikeln besteht, die aus dem Material nach einem der vorhergehenden Ansprüche gebildet sind.

9. Batteriekathode, die das Material nach einem der vorhergehenden Ansprüche beinhaltet, wobei die Batteriekathode insbesondere das in einem Bindemittel dispergierte Pulver nach dem vorhergehenden Anspruch beinhaltet.

10. Batterie, die bevorzugt unter einer Lithium-Ionen-Batterie und einer Lithiumbatterie gewählt ist und eine Kathode nach dem vorhergehenden Anspruch beinhaltet.

11. Lithium-Ionen-Batterie nach dem vorhergehenden Anspruch, die eine Kapazitätsretention nach fünfzehn Zyklen von mindestens 75 %, bevorzugt mindestens 85 %, besser mindestens 90 % aufweist.

12. Verfahren zur Herstellung eines Materials nach einem der Ansprüche 1 bis 7, das einen Schritt des Zerkleinerns von Rohstoffen beinhaltet, wobei die Rohstoffe so gewählt sind, dass am Ende des Zerkleinerungsschritts das Material nach einem der vorhergehenden Ansprüche erhalten wird.

13. Verfahren nach Anspruch 12, bei dem die Rohstoffe ein Pulver aus Titanpartikeln, ein Pulver aus Selenpartikeln und bevorzugt ein Pulver aus Lithiumsulfidpartikeln umfassen.

14. Verfahren nach einem der Ansprüche 12 und 13, wobei der Zerkleinerungsschritt in feuchter Umgebung in einem Lösungsmittel durchgeführt wird, wobei das Lösungsmittel bevorzugt Hexan ist, das bevorzugt eine Reinheit von mehr als 99,5 % aufweist.

15. Verfahren nach einem der Ansprüche 12 bis 14, wobei der Zerkleinerungsschritt unter einer reduzierenden oder bevorzugt neutralen Atmosphäre ausgeführt wird, beispielsweise unter Argon.

## Claims

1. Material of formula LiₐTi_{b}(AₓS₃₋ₓ)_{c} wherein A is a metalloid element chosen from selenium, tellurium and mixtures thereof, and the stoichiometric coefficients a, b, c and x are such that
∘ 0 < x < 2.2;
∘ 0.4 ≤ a ≤ 4.5;
∘ 0.9 ≤ b ≤ 1.1; and
∘ 0.9 ≤ c ≤ 1.1.

2. Material according to claim 1, wherein the metalloid element A is selenium.

3. Material according to either one of claims 1 and 2, wherein the stoichiometric coefficient x is less than or equal to 1.2.

4. Material according to any one of the preceding claims, wherein the stoichiometric coefficient x is equal to 1.

5. Material according to any one of the preceding claims, wherein the stoichiometric coefficient a is equal to 2 and/or the stoichiometric coefficient b is equal to 1 and/or the stoichiometric coefficient c is equal to 1, preferably the stoichiometric coefficient a is equal to 2 and the stoichiometric coefficient b is equal to 1 and the stoichiometric coefficient c is equal to 1.

6. Material according to any one of the preceding claims, having an NaCl-type crystallographic structure.

7. Material according to any one of the preceding claims, having a maximum reversible capacity of greater than 200 mAh.g⁻¹, or even of greater than 230 mAh.g⁻¹.

8. Powder comprising, or even consisting of, particles formed of the material according to any one of the preceding claims.

9. Battery cathode comprising the material according to any one of the preceding claims, the battery cathode comprising in particular the powder according to the preceding claim dispersed in a binder.

10. Battery, preferably chosen from a lithium-ion battery and a lithium battery, comprising a cathode according to the preceding claim.

11. Lithium-ion battery according to the preceding claim, having a capacity retention at fifteen cycles of greater than or equal to 75%, preferably of greater than or equal to 85%, better still of greater than or equal to 90%.

12. Process for manufacturing a material according to any one of Claims 1 to 7, comprising a step of milling raw materials, the raw materials being chosen so as to obtain, at the end of the milling step, the material according to any one of the preceding claims.

13. Process according to Claim 12, wherein the raw materials comprise a powder of titanium particles, a powder of selenium particles, and preferably a powder of lithium sulfide particles.

14. Process according to either one of Claims 12 and 13, the milling step being carried out in a wet environment in a solvent, preferably the solvent being hexane, preferably having a purity of greater than 99.5%.

15. Process according to any one of Claims 12 to 14, the milling step being carried out in a reducing or preferably inert atmosphere, for example under argon.
